# FASCICULE DE BREVET EUROPEEN

(11) **EP 1 123 788 B1**
(45) Date de publication et mention de la délivrance du brevet: **20.07.2005**
(21) Numéro de dépôt: 01400192.9
(22) Date de dépôt: 24.01.2001
(51) Int. Cl.: B29C 33/12, B29C 45/14, B29C 33/30

(54) **Moule à plan de joint mobile pour réaliser une pièce en matière plastique et un procédé utilisant un tel moule**
Formwerkzeug mit bewegbarer Trennebene zur Herstellung von Kunststoffteilen sowie Verfahren zur Verwendung eines solchen Formwerkzeugs
Mould with displaceable parting line for moulding a plastic part and process using such a mould

(30) Priorité: 24.01.2000 FR 0000858
(43) Date de publication de la demande: 16.08.2001
(73) Titulaire: COMPAGNIE PLASTIC OMNIUM, 69007 Lyon (FR)
(72) Inventeur: Blanchon, Charles-Guillaume, 01100 Oyonnax (FR); Vuaillat, Thierry, 01100 Veyziat (FR)
(74) Mandataire: Tanty, François

(56) Documents cités:
- EP-A- 0 127 159
- EP-A- 0 186 015
- EP-A- 0 500 033
- EP-A- 0 531 977
- PATENT ABSTRACTS OF JAPAN vol. 1995, no. 11, 26 décembre 1995 (1995-12-26) & JP 07 214593 A (TOYODA GOSEI CO LTD), 15 août 1995 (1995-08-15)
- PATENT ABSTRACTS OF JAPAN vol. 1995, no. 02, 31 mars 1995 (1995-03-31) & JP 06 328498 A (NISSHA PRINTING CO LTD), 29 novembre 1994 (1994-11-29)
- PATENT ABSTRACTS OF JAPAN vol. 1999, no. 08, 30 juin 1999 (1999-06-30) & JP 11 077815 A (KASAI KOGYO CO LTD), 23 mars 1999 (1999-03-23)
- PATENT ABSTRACTS OF JAPAN vol. 013, no. 194 (M-823), 10 mai 1989 (1989-05-10) & JP 01 022521 A (INAX CORP), 25 janvier 1989 (1989-01-25)

## Description

La présente invention concerne un moule à plan de joint mobile pour réaliser une pièce en matière plastique et un procédé utilisant un tel moule.

Il est connu de réaliser des pièces en matière plastique par des procédés d'injection ou d'extrusion-compression dans un moule en deux parties délimitant une empreinte.

Les deux parties du moule comportent chacune une zone périphérique qui est destinée à venir en contact avec la zone périphérique de l'autre partie de moule.

On appelle plan de joint du moule le plan défini par ces deux zones périphériques en appui l'une contre l'autre.

Dans certains cas, les zones périphériques des parties du moule peuvent ne pas être planes. Mais même dans cette hypothèse, on désigne plan de joint, par abus de langage, la surface constituée par les deux zones périphériques en appui l'une contre l'autre.

Il est également connu de réaliser des pièces en matière plastique renforcées comportant une ou plusieurs feuilles de renfort qui peuvent être par exemple des mats de fibres de renfort ou encore des tissus, par exemple ceux connus sous l'appellation HTPC.

Cette feuille de renfort est déposée dans le moule ouvert, par exemple sur son poinçon, c'est-à-dire sa partie mâle, puis le moule est refermé. Une certaine quantité de matière plastique est ensuite apportée dans le moule, soit avant sa fermeture par extrusion, soit après sa fermeture par injection.

Ces procédés connus de réalisation de pièces en matière plastique renforcées donnent satisfaction mais nécessitent certains travaux de reprise car la feuille de renfort ne se positionne pas toujours exactement au bon endroit dans le moule, de sorte que certains de ses bords périphériques sont quelquefois pincés dans le plan de joint du moule, entre les deux zones périphériques en appui des deux parties du moule.

Une opération d'ébavurage est alors nécessaire à la sortie du moule, pour supprimer les parties de la feuille de renfort dépassant de la pièce.

Les brevets européen EP 0 531 997, EP 0 186 015, EP 0 500 033 et le brevet japonais JP 06 34 4377 décrivent des procédés pour réaliser des pièces en matière plastique dans lesquelles on surmoule des feuilles avec de la résine. Dans ces procédés, on utilise des moules comportant des organes de maintien qui viennent pincer les bords de la feuille lors de la fermeture du moule. Des opérations de reprise telles que le pliage ou la découpe des bords de la feuille peuvent être nécessaires après le surmoulage.

Le brevet européen EP 0 127 159 décrit un moule comportant une plaque de démoulage apte à coulisser par rapport à une partie de moule et servant à maintenir un insert constitué par une feuille en aluminium. Un tel procédé est utilisé pour la fabrication de boîtes pour contenir des liquides et ne concerne pas la fabrication de pièces en matière plastique renforcée telle que celles rencontrées dans le domaine automobile. Le brevet européen EP 0 186 015 décrit un moule selon le préambule de la revendication 1.

La présente invention vise notamment à fournir un moule dont la structure empêche le risque de pincement d'une feuille dans son plan de joint.

La présente invention a pour objet un moule pour réaliser une pièce en matière plastique, ce moule comprenant deux parties délimitant entre elles une empreinte correspondant à la pièce à réaliser, chaque partie de moule comportant une zone périphérique destinée à venir au contact de la zone périphérique de l'autre partie de moule, les deux zones ainsi réunies définissant le plan de joint du moule, dans lequel l'une des parties du moule est destinée à recevoir une feuille et est constituée par deux blocs, l'un central et délimitant substantiellement l'empreinte du moule, l'autre périphérique et supportant la zone périphérique, les deux blocs étant aptes à coulisser l'un par rapport à l'autre suivant la direction de fermeture du moule, le bloc périphérique pouvant être déplacé pour éloigner la zone périphérique des bords de la feuille.

Le moule selon l'invention présente l'avantage que le bloc périphérique peut être déplacé préalablement à l'opération de fermeture du moule, de manière qu'une feuille introduite dans le moule ne puisse pas être pincée dans le plan de joint du moule lors de sa fermeture.

En effet, avec le moule selon l'invention, on peut commencer par mettre en place, sur la partie en deux blocs du moule, une feuille de renfort ou toute autre feuille destinée à être incorporée ou surmoulée dans la pièce à réaliser.

Le moule étant maintenu ouvert, on déplace ensuite le bloc périphérique de manière à éloigner sa zone périphérique de la feuille, afin de s'assurer que les bords périphériques de cette feuille ne dépassent pas sur la zone périphérique définissant le plan de joint.

Une fois le bloc périphérique déplacé, on approche l'autre partie du moule jusqu'à ce que sa zone périphérique vienne prendre appui sur la zone périphérique éloignée de la feuille.

A ce stade, on a reconstitué le plan de joint du moule, par appui mutuel des deux zones périphériques des deux parties du moule, à distance suffisante de la feuille pour garantir que celle-ci n'a pas été pincée dans le plan de joint.

En dernier lieu, on ramène le bloc périphérique en position de moulage, tout en conservant les deux zones périphériques en contact, ce qui achève la fermeture du moule, lequel retrouve ainsi sa configuration de moulage normale.

La matière plastique peut être introduite par injection à la fin des opérations décrites ci-dessus ou par extrusion, à un moment où le moule est encore ouvert.

Le bloc périphérique peut comporter des vérins qui commandent des tiges de maintien.

L'invention a également pour objet un procédé selon la revendication 3.

Le bloc périphérique est de préférence déplacé sans déplacer ni toucher la feuille.

La feuille de renfort peut être préalablement formée en dehors du moule.

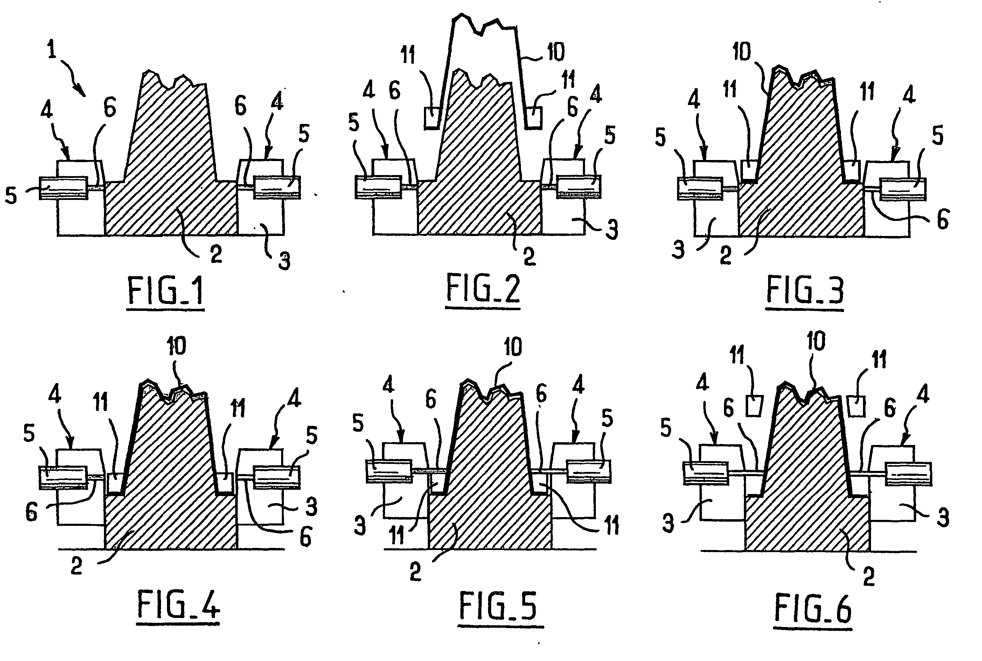

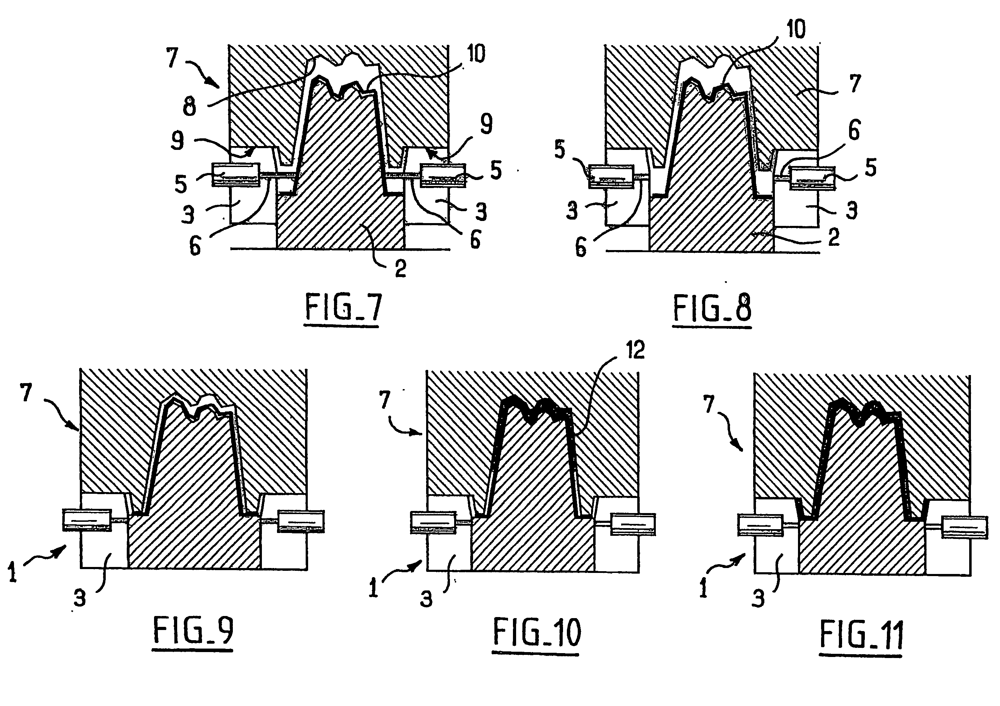

Dans le but de mieux faire comprendre l'invention, on va en décrire maintenant un mode de mise en oeuvre, donné à titre d'exemple non limitatif, en référence au dessin annexé sur lequel on a représenté onze schémas correspondant à onze étapes successives du procédé décrit ci-dessus.

Le moule représenté sur le dessin comprend une première partie 1, ou poinçon, constituée par deux blocs, l'un central 2, l'autre périphérique 3.

Le bloc central 2 délimite substantiellement l'empreinte du moule.

Le bloc périphérique 3 supporte une zone périphérique 4 correspondant au plan de joint du moule.

Le bloc périphérique 3 est susceptible de coulisser axialement autour du bloc central 2, suivant la direction de fermeture du moule.

Dans l'exemple représenté, le bloc périphérique 3 comporte en outre des vérins 5 qui commandent des tiges de maintien 6 dont la fonction sera décrite ultérieurement.

Le moule comporte également une deuxième partie 7, ou matrice, dont la forme est visible sur les schémas correspondant aux étapes 7 à 11.

Cette matrice 7 comporte une partie centrale 8, complémentaire au bloc central du poinçon, et délimitant avec ce bloc central la forme de la pièce à réaliser.

A sa périphérie, la matrice 7 comporte une zone périphérique 9 correspondant au plan de joint du moule et destinée à venir s'appuyer contre la zone périphérique 4 du poinçon.

On va maintenant décrire successivement les onze étapes illustrées.

Lors de l'étape n° 1, le poinçon 1 se trouve en position de moulage, son bloc périphérique 3 étant en position basse (par rapport au dessin).

A l'étape n° 2, on apporte sur le poinçon une feuille de renfort 10 de type HTPC, préalablement formée en dehors du moule. L'apport s'effectue à l'aide d'un outil de préhension 11 schématiquement représenté par deux profilés qui viennent appliquer les bords de la feuille préformée contre la base du poinçon.

A l'étape n° 3, la feuille 10 est positionnée sur le poinçon et est maintenue en place par les profilés 11.

A l'étape n° 4, le bloc périphérique 3 du poinçon est déplacé en position haute. Dans cette position, la zone périphérique 4 du poinçon, qui définit le plan de joint du moule, a été éloignée des bords de la feuille de renfort.

Cette opération garantit que les bords de la feuille de renfort ne débordent pas sur la zone périphérique définissant le plan de joint, même dans l'hypothèse où la feuille de renfort serait mal centrée sur le poinçon et dépasserait légèrement de l'empreinte proprement dite.

A l'étape n° 5, les vérins 5 ont été actionnés pour amener les tiges de maintien 6 contre la feuille de renfort, ce qui permet le retrait des profilés 11, comme on le voit à l'étape n° 6.

La feuille de renfort tient sur le poinçon grâce aux tiges de maintien 6, de sorte que le procédé peut aussi être mis en oeuvre en orientant le moule de sorte que sa direction de fermeture soit horizontale.

Le bloc périphérique du poinçon est maintenu en position haute (par rapport au dessin).

A l'étape n° 7, on approche la matrice 7 du poinçon, jusqu'à ce que sa zone périphérique 9 vienne prendre appui contre la zone périphérique 4 du poinçon.

Du fait du décalage du plan de joint par rapport aux bords de la feuille 10, il est impossible que cette dernière soit pincée dans le plan de joint du moule.

A l'étape n° 8, on actionne à nouveau les vérins 5 pour rétracter les tiges de maintien. La feuille peut alors éventuellement bouger légèrement dans le moule mais ne risque plus d'être pincée dans le plan de joint.

A l'étape n° 9, on ramène le bloc périphérique 3 du poinçon en position basse (par rapport au dessin), en même temps que l'on poursuit la fermeture du moule de sorte que la matrice 7 reste en appui contre le bloc périphérique 3 par le plan de joint.

Le moule a ainsi retrouvé sa position de moulage. Une matière plastique 12 peut-être injectée dans le moule, comme on le voit à l'étape n° 10.

A l'étape n° 11, l'injection est terminée et la pièce renforcée est obtenue.

Du fait que les bords de la feuille n'ont pas été emprisonnés dans le plan de joint du moule, aucune opération de reprise de la pièce ne s'impose.

Il est bien entendu que le mode de mise en oeuvre qui vient d'être décrit ne présente aucun caractère limitatif et qu'il pourra recevoir toutes modifications désirables sans sortir pour cela du cadre des revendications.

## Revendications

1. Moule pour réaliser une pièce en matière plastique, ce moule comprenant deux parties (1, 7) délimitant entre elles une empreinte correspondant à la pièce à réaliser, chaque partie (1, 7) de moule comportant une zone périphérique (4, 9) destinée à venir au contact de la zone périphérique (9, 4) de l'autre partie (7, 1) de moule, les deux zones (4, 9) ainsi réunies définissant le plan de joint du moule, l'une (1) des parties du moule étant destinée à recevoir une feuille (10) et constituée par deux blocs (2, 3), l'un central (2) et délimitant substantiellement l'empreinte du moule, l'autre périphérique (3) et supportant la zone périphérique (4), les deux blocs (2, 3) étant aptes à coulisser l'un par rapport à l'autre suivant la direction de fermeture du moule, **caractérisé par le fait que** le bloc périphérique (3) peut être déplacé avant la fermeture du moule pour éloigner la zone périphérique (4) des bords de la feuille (10).

2. Moule selon la revendication 1, **caractérisé par le fait que** le bloc périphérique (3) comporte des vérins (5) qui commandent des tiges de maintien (6).

3. Procédé d'utilisation d'un moule pour réaliser une pièce en matière plastique, ce moule comprenant deux parties (1, 7) délimitant entre elles une empreinte correspondant à la pièce à réaliser, chaque partie (1, 7) de moule comportant une zone périphérique (4, 9) destinée à venir au contact de la zone périphérique (9, 4) de l'autre partie (7, 1) de moule, les deux zones (4, 9) ainsi réunies définissant le plan de joint du moule, l'une (1) des parties du moule étant constituée par deux blocs (2, 3), l'un central (2) et délimitant substantiellement l'empreinte du moule, l'autre périphérique (3) supportant la zone périphérique (4), les deux blocs (2, 3) étant aptes à coulisser l'un par rapport à l'autre suivant la direction de fermeture du moule, ledit procédé comportant les étapes suivantes :
- déposer, dans la partie (1) en deux blocs (2, 3) du moule, une feuille (10) destinée à être incorporée ou surmoulée dans la pièce à réaliser,
- déplacer le bloc périphérique (3), par exemple vers le haut, de manière à éloigner la zone périphérique (4) des bords de la feuille (10),
- refermer le moule en amenant la zone périphérique (9) de l'autre partie (7) du moule au contact de la zone périphérique (4) du bloc périphérique (3) sans pincer la feuille, et
- ramener le bloc périphérique (3) en position de moulage, tout en conservant les deux zones périphériques (4, 9) en contact.

4. Procédé selon la revendication précédente, **caractérisé par le fait que** le bloc périphérique est déplacé sans déplacer la feuille.

5. Procédé selon la revendication 3, **caractérisé par le fait que** le bloc périphérique est déplacé sans toucher la feuille.

6. Procédé selon la revendication 3, le moule comportant des vérins (5) qui commandent des tiges de maintien (6), ledit procédé comportant en outre les étapes suivantes :
- après le déplacement du bloc périphérique (3) de manière à éloigner la zone périphérique (4) des bords de la feuille de renfort (10), actionner les vérins (5) pour amener les tiges de maintien (6) contre la feuille de renfort (10),
- rétracter les vérins.

7. Procédé selon la revendication 3, **caractérisé par le fait que** la feuille de renfort (10) est préalablement formée en dehors du moule.

## Patentansprüche

1. Form zur Herstellung eines Kunststoffteils, wobei diese Form zwei Teile (1, 7) aufweist, welche untereinander einen dem herzustellenden Teil entsprechenden Formhohlraum abgrenzen, wobei jedes Teil (1, 7) der Form einen peripheren Bereich (4, 9) aufweist, der dazu ausgelegt ist, um mit dem peripheren Bereich (9, 4) des anderen Teils (7, 1) der Form in Berührung zu kommen, wobei die beiden derart zusammengeführten Bereiche (4, 9) die Verbindungsebene der Form ausbilden, wobei eines (1) der Teile der Form dazu ausgelegt ist, um eine Folie (10) aufzunehmen, und aus zwei Blöcken (2, 3) besteht, von denen einer zur substanziellen Abgrenzung des Formhohlraums mittig (2) und der andere zur Aufnahme des peripheren Bereichs (4) peripher (3) ist, wobei beide Blöcke (2, 3) in Bezug zueinander in der Schließrichtung der Form gleiten können, **dadurch gekennzeichnet, dass** der periphere Block (3) vor der Schließung der Form verschoben werden kann, um den peripheren Bereich (4) von den Rändern der Folie (10) zu entfernen.

2. Form nach Anspruch 1, **dadurch gekennzeichnet, dass** der periphere Block (3) Zylinder (5) aufweist, die die Haltestangen (6) steuern.

3. Verfahren für den Einsatz einer Form zur Herstellung eines Kunststoffteils, wobei diese Form zwei Teile (1, 7) aufweist, die untereinander einen dem herzustellenden Teil entsprechenden Formhohlraum abgrenzen, wobei jedes Teil (1, 7) der Form einen peripheren Bereich (4, 9) aufweist, der dazu ausgelegt ist, um mit dem peripheren Bereich (9, 4) des anderen Teils (7, 1) der Form in Berührung zu kommen, wobei die beiden derart zusammengeführten Bereiche (4,9) die Verbindungsebene der Form ausbilden, wobei eines (1) der Teile der Form aus zwei Blöcken (2, 3) besteht, von denen einer zur substanziellen Abgrenzung des Formhohlraums mittig (2) und der andere zur Aufnahme des peripheren Bereichs (4) peripher (3) ist, wobei beide Blöcke (2, 3) in Bezug zueinander in der Schließrichtung der Form gleiten können, wobei dieses Verfahren die folgenden Schritte umfasst:
- Ablegen einer Folie (10), die dazu bestimmt ist, in das herzustellende Teil eingearbeitet oder abgeformt zu werden, in den aus zwei Blöcken (2, 3) bestehenden Teil (1) der Form,
- Verschieben des peripheren Blocks (3), beispielsweise nach oben, um den peripheren Bereich (4) von den Rändern der Folie (10) zu entfernen.
- Schließen der Form, indem der periphere Bereich (9) des anderen Teils (7) der Form mit dem peripheren Bereich (4) des peripheren Blocks (3) in Berührung kommt, ohne die Folie einzuklemmen,
- Zurückführen des peripheren Blocks (3) in die Formungsstellung, wobei sich die beiden peripheren Bereiche (4, 9) weiterhin berühren.

4. Verfahren nach einem der vorangehenden Ansprüche, **dadurch gekennzeichnet, dass** der periphere Block verschoben wird, ohne die Folie zu verschieben.

5. Verfahren nach Anspruch 3, **dadurch gekennzeichnet, dass** der periphere Block verschoben wird, ohne die Folie zu berühren.

6. Verfahren nach Anspruch 3, wobei die Form Zylinder (5) aufweist, die Haltestangen (6) steuern, und das Verfahren unter anderem die folgenden Schritte umfasst:
- Betätigung der Zylinder (5), um die Haltestangen (6) gegen die Verstärkungsfolie (10) zu führen, nach der Verschiebung des peripheren Blocks (3), um den peripheren Bereich (4) von den Rändern der Verstärkungsfolie (10) zu entfernen,
- Zurückziehen der Zylinder.

7. Verfahren nach Anspruch 3, **dadurch gekennzeichnet, dass** die Verstärkungsfolie (10) außerhalb der Form vorgeformt wird.

## Claims

1. A mold for making a plastics material piece, the mold comprising two parts (1, 7) defining between them a cavity corresponding to the piece that is to be made, each mold part (1, 7) having a peripheral zone (4, 9) for coming into contact with the peripheral zone (9, 4) of the other mold part (7, 1), the two zones (4, 9), when united, defining the joint face of the mold, wherein one of the mold parts (1) is designed to receive a sheet (10) and is made up of two blocks (2, 3), namely a central block (2) defining substantially the mold cavity and a peripheral block (3) supporting the peripheral zone (4), the two blocks (2, 3) being suitable for sliding relative to each other in the mold closure direction, **characterized by** the fact that the peripheral block (3) is movable before closing the mold so as to move the peripheral zone (4) away from the edges of the sheet (10).

2. A mold according to claim 1, in which the peripheral block (3) has actuators (5) that control holding rods (6).

3. A method of using a mold for making a plastics material piece, the mold comprising two parts (1, 7) defining between them a cavity corresponding to the piece that is to be made, each mold part (1, 7) having a peripheral zone (4, 9) for coming into contact with the peripheral zone (9, 4) of the other mold part (7, 1), the two zones (4, 9), when united, defining the joint face of the mold, wherein one of the mold parts (1) is made up of two blocks (2, 3), namely a central block (2) defining substantially the mold cavity and a peripheral block (3) supporting the peripheral zone (4), the two blocks (2, 3) being suitable for sliding relative to each other in the mold closure direction, said method comprising the following steps:
· placing a sheet (10) for incorporation or overmolding in the piece that is to be made in the two-block part (1) of the mold;
· moving the peripheral block (3) so as to move the peripheral zone (4) away from the edges of the sheet (10);
· closing the mold by bringing the peripheral zone (9) of the other mold part (7) into contact with the peripheral zone (4) of the peripheral block (3) without pinching the sheet; and
· returning the peripheral block (3) to the molding position while keeping the two peripheral zones (4, 9) in contact.

4. A method according to the preceding claim, **characterized by** the fact that the peripheral block is moved without moving the sheet.

5. A method according to claim 3, **characterized by** the fact that the peripheral block is moved without touching the sheet.

6. A method according to claim 3, the mold comprising actuators (5) which control holding rods (6), said method comprising the following steps:
· after moving the peripheral block (3) to move the peripheral zone (4) away from the edges of the reinforcing sheet (10), actuating the actuators (5) to bring the holding rods against the reinforcing sheet (10);
· retracting the actuators.

7. A method according to claim 3, **characterized by** the fact that the reinforcing sheet (10) is preformed outside the mold.
